# FASCICULE DE BREVET EUROPEEN

(11) **EP 2 379 316 B1**
(45) Date de publication et mention de la délivrance du brevet: **28.08.2013**
(21) Numéro de dépôt: 09803876.3
(22) Date de dépôt: 16.12.2009
(51) Int. Cl.: B29D 30/06

(54) **ELEMENT DE GARNITURE POUR MOULE DE PNEUMATIQUES COMPRENANT UNE COQUE ET UN NOYAU**
FORMELEMENT FÜR EINE REIFENFORM MIT EINER SCHALE UND EINEM KERN
MOULDING ELEMENT FOR A TYRE MOULD, INCLUDING A SHELL AND A CORE

(30) Priorité: 17.12.2008 FR 0858706
(43) Date de publication de la demande: 26.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: LAUWERS, Olivier, F-63270 Yronde et Buron (FR)
(74) Mandataire: Lasson, Cédric Y. M.
(86) Numéro de dépôt international: PCT/FR2009/052569
(87) Numéro de publication internationale: WO 2010/076503

(56) Documents cités:
- EP-A- 0 523 958
- EP-A- 0 818 290
- EP-A- 0 868 955
- EP-A1- 1 652 644
- DE-A1-102004 028 462
- DE-C1- 19 929 333
- US-A- 2 736 924
- US-A- 4 576 559

## Description

L'invention concerne le domaine des moules de vulcanisation de pneumatiques, plus particulièrement des moules de type à secteurs.

Un moule à secteurs comprend plusieurs pièces séparées qui, par rapprochement relatif, délimitent un espace de moulage quasi-toroïdal. En particulier, un moule à secteurs comporte deux coquilles latérales pour le moulage des flancs du pneumatique, et plusieurs secteurs périphériques situés entre les coquilles pour le moulage de la bande de roulement du pneumatique. Le rapprochement de toutes ces pièces est assuré sur une cinématique appropriée par un mécanisme voulu. L'ébauche crue du futur pneumatique doit être fermement appliquée et maintenue contre le moule pour obtenir des dimensions géométriques et une architecture précise et pour imprimer la sculpture de la bande de roulement.

Pour former les sculptures de la bande de roulement, les secteurs du moule comprennent des éléments en saillie de la surface radialement intérieure des secteurs, ces éléments formant un négatif des sculptures à mouler sur la bande de roulement du pneumatique.

Pour qu'un même moule puisse être utilisé pour fabriquer des pneumatiques comprenant des formes de sculptures différentes, il est connu, par exemple du document EP 0 523 958, qu'un secteur du moule soit réalisé en plusieurs éléments : d'une part un bloc support ayant une forme générique définissant la courbure générale de la bande de roulement du pneumatique, et d'autre part une pluralité d'éléments de garniture rapportés sur le bloc support et destinés à former les sculptures de la bande de roulement du pneumatique.

L'élément de garniture décrit dans ce document est obtenu par moulage, par exemple par moulage d'acier. Ainsi, il s'agit d'un élément massif, lourd et coûteux à fabriquer.

Le document EP 1652644 - A décrit un élément de garniture, destiné à être rapporté sur un bloc support d'un secteur d'un moule à secteurs pour pneumatiques, ledit élément comprenant une surface profilée de moulage en matériau fritté.

L'invention a notamment pour but de proposer un élément de garniture plus économique.

A cet effet, l'invention a pour objet un élément de garniture comme défini dans la revendication 1, ledit élément étant destiné à être rapporté sur un bloc support d'un secteur d'un moule à secteurs pour pneumatique, l'élément de garniture étant destiné à former des sculptures d'une partie d'une bande de roulement d'un pneumatique, caractérisé en ce qu'il comprend une coque extérieure délimitant un volume intérieur et un noyau intérieur à la coque apte à supporter les efforts mécaniques subis par la coque lors du moulage du pneumatique, la coque et le noyau étant réalisés d'un seul tenant par frittage laser et en ce que le noyau comprend un maillage de cloisons. Des formes préférentielles de l'invention sont définies dans les revendications dépendantes.

Etant donné que seule la surface extérieure d'un élément de garniture participe au moulage des sculptures de la bande de roulement du pneumatique, la structure interne de l'élément de garniture peut être différente de la structure externe de cet élément. L'invention propose donc de concevoir un élément de garniture qui n'est pas massif comme dans l'état de la technique mais qui comprend une coque et un noyau.

Ainsi, on peut choisir des structures différentes pour la fabrication de la coque et du noyau sachant que ces deux parties de l'élément de garniture doivent vérifier des critères différents : en ce qui concerne la coque, il est important qu'elle soit relativement lisse pour que l'état de surface des sculptures soit correct, tandis que le noyau doit vérifier des critères de robustesse pour supporter les contraintes mécaniques liées au moulage du pneumatique.

La structure particulière de l'élément de garniture selon l'invention permet ainsi d'adapter le noyau aux contraintes qu'il subit. Ainsi, grâce au maillage de cloisons, on réalise un noyau structurellement suffisamment résistant aux contraintes mécaniques liées au moulage du pneumatique. Le noyau présente une résistance adaptée à ces contraintes ce qui permet de fabriquer un ensemble présentant les caractéristiques de résistance uniquement nécessaires et suffisantes. Ainsi, le noyau de l'ensemble selon l'invention ne présente pas de résistance superflue ce qui facilite et simplifie la fabrication de l'ensemble.

La coque et le noyau sont réalisés d'un seul tenant, c'est-à-dire que la coque et le noyau sont venus de matière, c'est-à-dire qu'ils sont réalisés dans le même matériau, ici par frittage laser.

L'élément est réalisé par fusion sélective par laser plus communément nommé frittage par laser ou frittage laser. Les objets sont produits par la fusion sélective des poudres et construits par superposition de couches. Cette technique de frittage est aussi appelée SLM (de l'anglais Selective Laser Melting). L'intérêt de cette technique de fabrication de pièces est que la forme de la pièce peut être modélisée par ordinateur et la pièce peut être facilement fabriquée par frittage sur la base de cette modélisation. En effet, le laser peut être piloté par un ordinateur comprenant une modélisation de la pièce et l'on peut alors fabriquer la pièce par frittage successif de couches de poudre superposées. Dans le cas de la fabrication d'une garniture de moule, cette technique est particulièrement bien adaptée car elle permet de fabriquer des éléments de garniture de petites dimensions tels que des lamelles ou des cordons.

En réalisant cette opération de frittage laser successivement sur des couches de matériau superposées les unes aux autres, on peut fabriquer l'élément de garniture de la forme souhaitée. Pour réaliser une zone qui, dans une couche donnée, est surfacique, il est nécessaire de faire balayer le laser sur toute la surface, ce qui nécessite un temps certain. En revanche, si l'on souhaite réaliser par frittage une zone qui, dans une couche donnée, est quasi-linéaire, par exemple une cloison verticale, il est nécessaire de balayer la poudre avec le laser le long de l'élément linéaire que l'on souhaite fabriquer. On comprend alors que réaliser un élément surfacique par frittage laser requiert un temps plus élevé que de réaliser un élément linéaire.

La forme et l'arrangement des cloisons peut être variable. Par exemple, le maillage de cloisons est conformé selon des arrangements prédéfinis de formes en deux dimensions telles que des formes en nid d'abeille, en losange, en triangle ou en carré, rectilignes ou ondulées, ou encore en trois dimensions telles que des formes en cube, en pyramide, en diamant ... Par ailleurs, comme indiqué précédemment, il est plus rapide de réaliser un maillage de cloisons par balayage du laser le long de courbes linéaires ou de petites structures, que de réaliser un matériau plein par balayage du laser sur des surfaces complètes. De manière alternative il est également possible de réaliser la structure du noyau à l'aide d'un réseau de poutres reliées entre elles de manière à former un ensemble structurel. Ainsi, lorsqu'on souhaite fabriquer un élément de garniture par frittage laser, il est particulièrement intéressant que cette garniture comprenne une coque et un noyau car cela permet un gain de temps considérable par rapport à un élément de garniture massif.

Selon d'autres caractéristiques optionnelles de l'élément:
- La coque est réalisée en un matériau plein ou massif. Ainsi, on est assuré que la coque possède une rigidité et un état de surface nécessaire au moulage correct des sculptures du pneumatique.
- La coque présente une épaisseur comprise entre 0,25 et 2 millimètres.
- La peau est conformée de manière que le volume intérieur qu'elle définit est fermé. Dans ce cas il devient impossible d'évacuer les poudres restant entre les cloisons du noyau. Cela présente l'avantage d'améliorer la conductivité thermique de l'élément de moule. Cette configuration autorise également la possibilité de réaliser un noyau ne comportant aucune cloison et dans lequel la poudre compactée présente à l'intérieur du volume fermé de la coque suffit à lui conférer la rigidité mécanique nécessaire et suffisante.
- Les cloisons du noyau présentent une épaisseur comprise entre 0,05 et 1 millimètre.
- Le noyau est formé d'un maillage de poutre reliées entre elles.

L'invention a également pour objet un procédé comme défini dans la revendication 8, pour la fabrication d'un élément tel que précédemment défini, dans lequel on procède par frittage laser successif de couches de matériau superposées selon une direction donnée.

Le matériau utilisé dans ce procédé peut être par exemple une poudre métallique.

L'invention sera mieux comprise à la lecture de la description qui va suivre, donnée uniquement à titre d'exemple et faite en se référant aux dessins dans lesquels :
- la figure 1 est une vue en perspective d'un éclaté d'un secteur d'un moule de vulcanisation pour pneumatique, le secteur comprenant plusieurs éléments de garniture selon l'invention,
- la figure 2 est une vue identique à celle de la figure 1 d'un secteur,
- la figure 3 est une vue détaillée en perspective d'un élément de garniture du secteur de la figure 1,
- la figure 4 est une vue en coupe de l'élément représenté sur la figure 3.

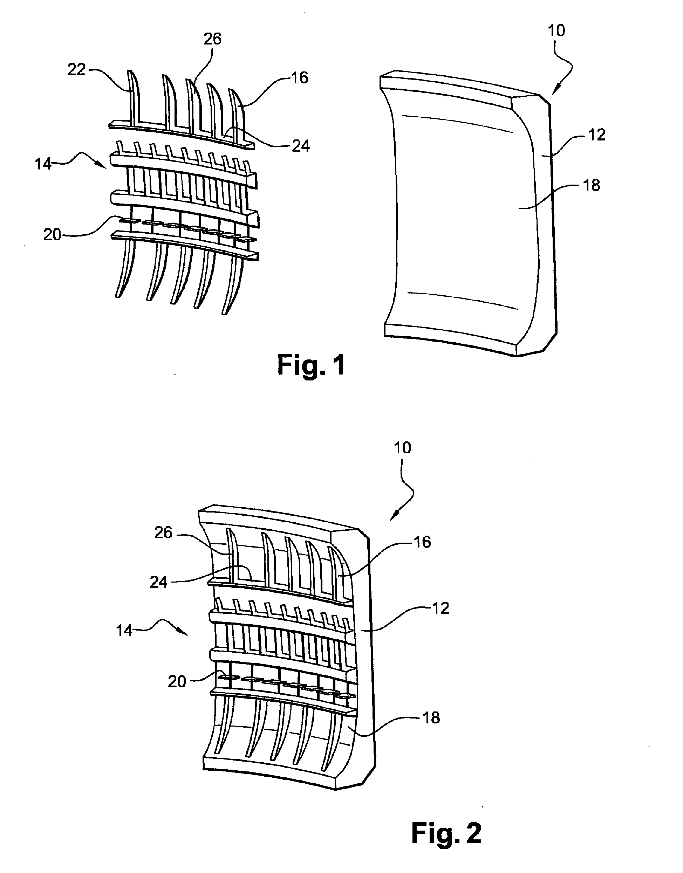

On a représenté sur les figures 1 et 2 un secteur 10 d'un moule à secteurs pour la vulcanisation d'un pneumatique. Le moule à secteurs (non représenté) comprend une pluralité de secteurs répartis circonférentiellement sous la forme d'un cylindre de manière à définir la forme générale de la bande de roulement du pneumatique à vulcaniser.

Sur la figure 1, les différents éléments composant le secteur 10 sont représentés de manière éclatée, tandis que, sur la figure 2, le secteur est représenté une fois que tous les éléments du secteur 10 sont montés.

Le secteur 10 comprend un bloc support 12 et un ensemble 14 d'éléments 16 de garniture destinés à former des sculptures d'une partie de la bande de roulement du pneumatique à mouler.

L'ensemble 14 des éléments 16 de garniture est destiné à être rapporté sur une surface 18 radialement interne du secteur 12, comme représenté sur la figure 2.

Différents types d'éléments de garniture 16 composent l'ensemble 14 : par exemple, l'ensemble 14 comprend des lamelles 20 orientées sensiblement circonférentiellement au pneumatique et destinées à former des rainures ménagées à la surface de la bande de roulement, ou des peignes 22 comportant un cordon 24 orienté circonférentiellement et un ensemble d'ailettes 26 orientées de manière axiale par rapport au pneumatique. Les ailettes 26 sont destinées à former des rainures situées en bordure de la bande de roulement du pneumatique.

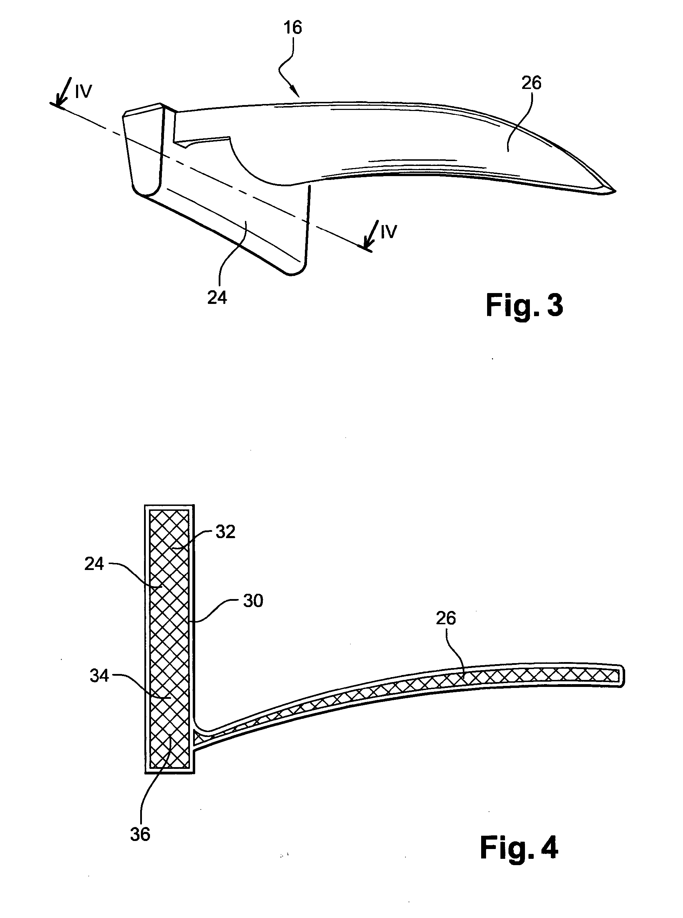

On a représenté sur la figure 3 un détail du peigne 22.

La figure 4 est une vue en coupe de l'ensemble du cordon 24 et de l'ailette 26 représentés sur la figure 3.

On constate que l'élément de garniture 16 représenté sur la figure 3 comporte une coque extérieure 30 délimitant un volume intérieur 32, et un noyau intérieur 34 occupant le volume intérieur 32.

La coque extérieure 30 est réalisée en matériau massif tandis que le noyau intérieur 34 comprend un maillage de cloisons 36 conformé en carré.

Entre les différentes cloisons 36 du maillage composant le noyau, il subsiste des espaces vides.

Ainsi, l'intérieur de la coque comprend majoritairement des espaces vides séparés par les cloisons 36 du noyau 34.

Les éléments de garniture 16 du secteur 10 sont réalisés par une technique de frittage laser sélectif de couches de poudre métallique de sorte que la coque 30 et le noyau 34 d'un élément 16 de garniture sont réalisés d'un seul tenant.

Lors de la fabrication d'un tel élément de garniture, le temps nécessaire à l'opération de frittage laser d'une paroi est d'autant plus élevé que la paroi est épaisse. En effet, il est nécessaire de balayer la couche de poudre métallique avec le laser sur une surface d'autant plus importante que la paroi est épaisse.

On comprend donc que la fabrication du noyau 34 par maillage de cloisons est plus rapide que si le noyau était massif.

En ce qui concerne l'épaisseur de la coque 30, celle-ci peut varier par exemple entre 0,25 et 2 millimètres pour que son aspect extérieur soit relativement lisse et permette la formation de sculptures de la bande de roulement du pneumatique qui soient lisses et nettes. Concernant l'épaisseur des cloisons 36 du noyau 34, celle-ci peut varier entre 0,05 et 1 millimètre. En effet, le noyau 34 est destiné à assurer la rigidité globale de l'élément 16 et il n'est par conséquent pas nécessaire que son état de surface soit parfait.

En outre, on notera qu'il est particulièrement avantageux de former le maillage de cloisons du noyau par frittage laser car ce procédé laisse de la poudre métallique dans les interstices du maillage. Or, la présence de cette poudre métallique permet d'améliorer la conduction thermique dans l'élément 16, ce qui permet un meilleur comportement thermique des éléments de garniture lors de la vulcanisation du pneumatique.

## Revendications

1. Elément (14) de garniture, destiné à être rapporté sur un bloc support (12) d'un secteur d'un moule à secteurs pour pneumatique, l'élément de garniture (14) étant destiné à former des sculptures d'une partie d'une bande de roulement d'un pneumatique, **caractérisé en ce qu'**il comprend une coque extérieure (30) délimitant un volume intérieur (32) et un noyau intérieur à la coque (34) apte à supporter les efforts mécaniques subis par la coque lors du moulage du pneumatique, la coque (30) et le noyau (34) étant réalisés d'un seul tenant par frittage laser et **en ce que** le noyau (34) comprend un maillage de cloisons (36).

2. Elément (14) selon l'une quelconque des revendications précédentes, dans lequel la coque (30) présente une épaisseur comprise entre 0,25 et 2 millimètres.

3. Elément (14) selon l'une quelconque des revendications précédentes dans laquelle la peau (30) est conformée de manière que le volume intérieur (32) qu'elle définit est fermé.

4. Elément (14) selon l'une quelconque des revendications précédentes, dans lequel le maillage de cloisons (36) en conformé en nid d'abeille, en losange, en triangles ou en carrés.

5. Elément (14) selon l'une quelconque des revendications précédentes, dans lequel les cloisons (36) présentent une épaisseur comprise entre 0,05 et 1 millimètres.

6. Elément (14) selon l'une quelconque des revendications précédentes, dans lequel le noyau est formé d'un maillage de poutres reliées entre elles.

7. Elément (14) selon l'une quelconque des revendications précédentes, dans lequel l'espace entre les cloisons (36) du noyau (34) est occupé par de la poudre métallique.

8. Procédé de fabrication d'un élément (14) selon l'une quelconque des revendications précédentes, **caractérisé en ce que** l'on procède par frittage laser successif de couches de matériau superposées selon une direction donnée.

## Patentansprüche

1. Einsatzelement (14), das dazu bestimmt ist, an einen Trägerblock (12) eines Sektors einer Form mit Sektoren für einen Luftreifen angefügt zu werden, wobei das Einsatzelement (14) dazu bestimmt ist, Profile eines Teils eines Laufstreifens eines Luftreifens zu formen, **dadurch gekennzeichnet, dass** es eine ein Innenvolumen (32) begrenzende Außenschale (30) und einen Kern innerhalb der Schale (34) enthält, der den von der Schale beim Formen des Luftreifens erfahrenen mechanischen Kräfte standhalten kann, wobei die Schale (30) und der Kern (34) durch Lasersintern in einem Stück hergestellt werden, und dass der Kern (34) ein Gitternetz von Trennwänden (36) enthält.

2. Element (14) nach dem vorhergehenden Anspruch, wobei die Schale (30) eine Dicke zwischen 0,25 und 2 Millimeter aufweist.

3. Element (14) nach einem der vorhergehenden Ansprüche, wobei die Haut (30) so gestaltet ist, dass das von ihr definierte Innenvolumen (32) geschlossen ist.

4. Element (14) nach einem der vorhergehenden Ansprüche, wobei das Gitternetz von Trennwänden (36) wabenförmig, rautenförmig, in Dreiecken oder Quadraten gestaltet ist.

5. Element (14) nach einem der vorhergehenden Ansprüche, wobei die Trennwände (36) eine Dicke zwischen 0,05 und 1 Millimeter aufweisen.

6. Element (14) nach einem der vorhergehenden Ansprüche, wobei der Kern von einem Gitterwerk von miteinander verbundenen Balken geformt wird.

7. Element (14) nach einem der vorhergehenden Ansprüche, wobei der Raum zwischen den Trennwänden (36) des Kerns (34) von Metallpulver eingenommen wird.

8. Herstellungsverfahren eines Elements (14) nach einem der vorhergehenden Ansprüche, **dadurch gekennzeichnet, dass** durch aufeinanderfolgendes Lasersintern von gemäß einer gegebenen Richtung übereinander angeordneten Schichten vorgegangen wird.

## Claims

1. Lining element (14) intended to be applied to a support block (12) of a segment of a segmented mould for tyres, the lining element (14) being intended to form patterns on part of a tyre tread, **characterized in that** it comprises an outer shell (30) delimiting an inner volume (32) and a core (34) inside the shell for withstanding the mechanical forces acting on the shell when the tyre is moulded, the shell (30) and the core (34) being made in one piece by laser sintering, and **in that** the core (34) comprises a network of partitions (36).

2. Element (14) according to the preceding claim, in which the shell (30) has a thickness in the range from 0.25 to 2 millimetres.

3. Element (14) according to either one of the preceding claims, in which the skin (30) is shaped in such a way that the inner volume (32) which it delimits is sealed.

4. Element (14) according to any one of the preceding claims, in which the network of partitions (36) is shaped in the form of a honeycomb, rhombus, triangles or squares.

5. Element (14) according to any one of the preceding claims, in which the partitions (36) have a thickness in the range from 0.05 to 1 millimetre.

6. Element (14) according to any one of the preceding claims, in which the core is formed by a network of interconnected supporting bars.

7. Element (14) according to any one of the preceding claims, in which the space between the partitions (36) of the core (34) is occupied by metal powder.

8. Method of manufacturing an element (14) according to any one of the preceding claims, **characterized in that** the process is one of sequential laser sintering of layers of material superposed in a given direction.
